# EUROPEAN PATENT APPLICATION

(11) **EP 4 047 785 A1**
(43) Date of publication of application: **24.08.2022**
(21) Application number: 21157892.7
(22) Date of filing: 18.02.2021
(51) Int. Cl.: H02J 13/00, H04L 12/24, G06Q 10/00

(54) **CONVERTING DATA STRUCTURES FOR WIND TURBINE OPERATION**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

It is described a method of converting a first data structure (104) related to a device (101) to a second data structure (106) adhering to a predetermined second data model (207), the method comprising: analyzing the first data structure (104) and/or a first data model (205) to which the first data structure adheres, to extract plural first properties (729a,...,g); analyzing the second data model (207), to extract plural second properties (1052a, ...,e); inferring relationships (212) between the first properties (729a,...,g) and the second properties (1052a, ...,e); and creating the second data structure (106) representing the converted first data structure using the relationships.

## Description

### Field of invention

The present invention relates to a method and to an arrangement of converting a first data structure related to a device to a second data structure adhering to a predetermined second data model. Furthermore, the present invention relates to a wind turbine comprising the arrangement for converting the first data structure into the second data structure. Embodiments of the invention may be applicable to any logical device e.g. substation equipment, renewable generators etc.

### Art Background

During operation of a wind turbine, conventionally device data may be exchanged or communicated to a wind turbine controller or for example to a wind park controller or a grid operator, in particular to a supervisory control and data acquisition (SCADA) system. Furthermore, between control modules or controllers of the SCADA system and the wind turbine devices also control data may be communicated during operation. On a conventional wind farm, the SCADA system may have the task to gather data from all the wind farm electronic devices, such as wind turbine controllers, grid connection meters, meteorology stations, switch gear equipment, etc. For proper exchange of data, the SCADA or in general control system, needs to be aware and in knowledge of the data model for the data to be expected from the devices or equipment. Often, devices are fitted with a data model which is specific (or proprietary) to the manufacture of the device (OEM), while some other devices may utilize a data model which is fulfilling and IEC information model standard, such as IEC 61400-25 for wind farms, or ICE 61850 (for substation equipment) .

The IEC standardized data model may be based on an object-oriented node structure, with naming rules, data hierarchy rules (based on devices, functionalities) and some developed data type structures. The data can for example be organized in nested structures or included in arrays of values. The IEC semantics enables interoperability and similar machine-processing and event handling of similar type of signals.

In order to have consistency of the data (for downstream analysis and statistics), a SCADA system may need to map or translate the several specific data models for integration into a unified model that can be based either on a structured IEC standard or on a structure that is specific to the SCADA manufacturer. In order to be able to expose the data to external parties (such as customers, independent wind farm operators) it may also be necessary to map or translate the specific data formats to a standardized information model that can be for example the IEC information model.

Conventionally, the mapping from a for example flat OEM proprietary data format to a standardized and structured data format is usually performed by a skilled engineer who has knowledge of both, the structured (for example IEC) information model rules and the specific data models of the devices providing the data. This process is cumbersome and may last several working weeks, as there may be thousands of data points that must be mapped. Due to the high amount of data to be processed and due to the repetitive nature of the task, by working very often just on simple spread sheets, manual errors may occur. Due to the personal interpretations done on some data points, that do not translate easily, it can also occur that the translations vary from person to person and from time to time. So the resulting data model may also lack consistency which may be a problem for downstream users (for example the same function could be named differently at two different places) and may also deteriorate the operation of the wind turbine.

Thus, there may be a need for a method and a corresponding arrangement of converting a first data structure related to a device (for example of a wind park) to a second data structure adhering to a predetermined (second) data model, wherein reliability of data conversion is improved and also required time for the conversion is reduced.

### Summary of the Invention

This need may be met by the subject matter according to the independent claims. Advantageous embodiments of the present invention are described by the dependent claims.

According to an embodiment of the present invention it is provided a method of converting a first (e.g. source) data structure (e.g. adhering to a predetermined first (e.g. source) data model) related to a device (e.g. of a wind park) to a second (e.g. target) data structure adhering to a predetermined second (e.g. target) data model, the method comprising analyzing the first data structure and/or a first data model to which the first data structure adheres, to extract plural first properties; analyzing the second data model, to extract plural second properties; inferring relationships between the first properties and the second properties; and creating the second data structure representing the converted first data structure using the relationships.

The method may be implemented in software and/or hardware. The method may for example be performed by a communication module (for example comprised in a wind turbine controller, or in an interface or comprised a wind park controller). The method may be performed while the wind turbine is in operation or while in general the device providing the first data structure is in operation. The method may be part of a communication method between the device and another device such as a control module or a monitoring module.

The first data structure may for example relate or contain data describing or defining the state of the device, and/or it may comprise data related to measurement data, in case the device is a measurement sensor for example. Further, the first data structure may relate or contain the data related to control either for sending commands or setpoints to the devices.
The device may for example be a device of a wind turbine or a wind park. The device may be configured as a measuring device for measuring for example electrical and/or mechanical properties of one or more components of the wind turbine or the wind park. The device may additionally or alternatively also be configured as an actuator device. The first data structure may also be referred to as a source data structure. The first data structure may adhere to a predetermined first data model, which defines the organization and data scheme of the first data structure.

For example, the first data structure may adhere to a OEM-specific data model which may be based on a flat structure, for example providing plural data records on a same hierarchical level. The flat data may for example comprise a list of signals or data items with simple categories of data. Possible data point categories may for example comprise name of the data point, type or functionality of the data point (for example measurement, command), component (for example generator, rotor, yaw system, etc.), data type (for example flowed), controller type (type of device that is the source of the data), description of the data point, scientific calculation (information if the data point results from a statistical calculation such as minimum, maximum, average, standard deviation). The data point categories may also be referred to as the first properties comprised or being defined within the first data structure. Each property may for example be characterized by a name and a value.

In particular, the first data structure and/or the first data model may be available in text representation. Also the second data model may be available as a text representation.

The first data structure and/or the first data model may be analyzed partly by human intelligence and partly by an automatic process, in particular computer-implemented method. The first data structure may be considered as an instantiation of data which adheres or satisfies the first data model. The first data model may be considered as an abstract definition of the kind and structure of data to be comprised in the first data structure and may be given as a rule set defining the format of the first data structure and in particular defining all allowed and/or mandatory properties which must be comprised within the first data structure.

In particular, the first data structure may comprise two or more data records, each record comprising a number of first attributes. However, the different records may comprise a different number or a different type of first properties. In analyzing the first data structure, all occurring properties in the plural data records may be recognized.

Analyzing the second data model may partly be performed by human intelligence as well as partly by an automatic process. For example, extracting same or similar properties or in general extracting the properties, for example extracting the first properties from the first data structure and extracting the second properties from the second data model, may be performed by an automatic process, involving parsing for example respective text representations of the first data structure and the second data model.

The first properties and the second properties may for example be extracted by splitting the text representation into a list of data lines and analyzing the data lines. Each data line may comprise a separator which may be utilized for separating for example the name from the value of the respective property.

The second data model may be considered as a definition of any second data structure. The definition may for example comprise the definition of all possible and/or all mandatory second properties. Furthermore, the second data model may define a hierarchy or a nested structure of different nodes which may be present. The second data model may in particular adhere to an IEC information model standard, such as IEC 61400-25 for wind farms or IEC 61850 for substation equipment. The second data model may generally be defined for example based on an object-oriented node structure with naming rules, data hierarchy rules and some developed or complex data type structures. The data according to the second data model may be organized in nested structures or included in arrays of values or hash tables. The first data model in contrast may not be compliant with a standardized data model.

Inferring the relationships between the first properties and the second properties may partly be performed using human intelligence and may partly be performed or aided by an automatic process. After inferring the relationships, for example a software tool may be configured using the inferred relationships. Creating the second data structure representing the converted first data structure may be entirely or at least partly performed by an automatic process which has appropriately been configured based on the inferred relationships. Thereby, a reliable conversion and also time-consuming conversion may be realized. The inferred relationships may be stored for example in form of electronic files, such as containing mapping rules, associations between first properties and second properties, translation rules, associations, and so forth. The first data structure or the first data model may be easily to process, e.g. to parse, since it may be comprised of one or more data records separated by a known separator, wherein each data record may comprise plural pairs of names and values of plural first properties.

In contrast, the second data structure to be created, may have a complex structure including a hierarchy and/or a nested structure and/or one or more arrays of dynamically varying size and so forth. By the method according to this embodiment, the conversion may be improved regarding reliability and consistency, while further saving processing time.

According to the embodiment of the present invention analyzing the first data structure and/or the first data model further comprises at least one of: creating at least one first catalogue for the first properties; grouping of first properties; and/or wherein analyzing the second data model further comprises at least one of: creating at least one second catalogue for the second properties; grouping of second properties.

The first catalogue of the first properties may entirely or at least partly be performed by an automatic process. Therein, the text representation of the first data structure may be parsed and dissected into portions due to the occurrence of known separators. The first catalogue may be stored as an electronic file. The first catalogue may be edited for example by a human expert, in order to correct errors, such as to delete properties or add further properties. The grouping of the first properties may partly or entirely been performed by human expert while an automatic process may also aid in this respect.

Also the second catalogue may entirely or at least partly be created by an automatic process, involving parsing the text representation of the second data model, and recognizing properties, for example their name and possible value or data type, respectively. The grouping of the second properties may partly or entirely be performed by a human expert.

The first catalogue and/or the second catalogue may advantageously be used for inferring the relationships between the first properties and the second properties. The first catalogue may for example comprise all first properties which may be expected to be encountered in any data record of the first data structure. The second catalogue may already be part of the definition of the second data model and may thus not be required to be created according to embodiments of the present invention. Also the grouping of the second properties may be pre-given within the second data model, such that a grouping step is optional.

According to an embodiment of the present invention, creating the second data structure is further based on at least one of: the at least one first catalogue; the at least one second catalogue; the grouping of the first properties; the grouping of the second properties.

The first catalogue and/or second catalogue and the grouped first properties and grouped second properties may all be considered for creating the second data structure, may in particular be considered for inferring the relationships. Thereby, in particular the step of inferring the relationships may be performed in a more reliable and consistent manner and in particular erroneous relationships may be reduced.

According to an embodiment of the present invention, the method comprises deriving from at least the relationships and/or the first catalogue and/or second catalogue at least one mapping catalogue and/or transformation rule and/or recommendation; and creating the second data structure further based on the at least one mapping catalogue and/or transformation rule and/or recommendation.

The mapping catalogue may comprise definitions of associations between one or more first properties to one or more second properties. The transformation rules may comprise a definition of the manner how to transform a considered first property to a second property or more than one second property. In case, for example, particular first properties are missing for particular second properties, which are mandatory, one or more recommendations may be defined how to set the mandatory second property or second properties.

The mapping catalogue and/or the transformation rule and/or the recommendation may entirely or partly be created by a human expert which may however be supported by an automatic process.

According to an embodiment of the present invention, creating the second data structure is performed by an automated, in particular computer implemented, process receiving as configuration data the first catalogue and/or the second catalogue and/or the relationships and/or the at least one mapping catalogue and/or transformation rule and/or recommendation.

The computer may comprise a processor and electronic storage into which a computer program is loaded. The computer program may be executed for reading for example the configuration data. Thereupon, the first data structure may be read-in and the conversion to the second data structure may sequentially be performed for all data records comprised in the first data structure. For each data record in the first data structure, exactly one or more than one instance of a data structure adhering to the second data model may be created.

The second data structure may also be created in a text representation. The text representation of the second data structure may be converted in electrical and/or optical and/or wireless signals, which are then supplied to a destination device. Similarly, also the first data structure may be received via electrical and/or optical and/or wireless signals and may then be transformed in a text representation which may form the basis for the conversion method.

According to an embodiment of the present invention, inferring relationships is performed by an expert, including at least one of: comparing the first data structure and/or a first data model with the second data model; deciding which first properties and second properties need to be mapped; deciding what rules and/or transformation algorithms are necessary; deciding what groups of first properties and/or second properties need to be treated commonly and/or what rule applies to them; and/or wherein inferring relationships comprises at least one of: creating rules for mapping of elements of the first catalogue to elements of the second catalogue; creating rules for mapping property names and/or description and/or abbreviations; creating rules for mapping data types; creating rules for creating complex data elements comprising second properties from first properties; storing one or more created rules in a mapping template file.

The first data structure and the first data model may be compared with the second data model by a human expert aided by an automatic process. Also to decide which properties to match and which rules or transformation algorithms are necessary and deciding which groups may be treated commonly, may be (partly) performed by a human expert. Also the mapping rules may be derived by a human expert. All the mapping definitions and grouping definitions as well as mapping rules may then be utilized for creating a configuration file which can be loaded for configuration of the software conversion method. Thereby, workload for the human expert may be reduced and reliability the conversion method may be increased.

According to an embodiment of the present invention, the first properties include at least one of: name; group; component, defining a hardware and/or software component to which the first data structure relates; data type; controller type; description; scientific calculation, in particular Min, Max, Mean and/or Standard deviation. Additional first properties and/or additional categories may be possible.

According to an embodiment of the present invention, the second properties include at least one of: name; logical node; common data class; logical device; description. Also further second properties may be supported, depending on the particular application. Properties may adhere or may be defined by IEC 61400, where IEC means International Electrotechnical Commission.

Thereby, commonly utilized data models may be supported for the first data model as well as for the second data model.

According to an embodiment of the present invention, the relationships and/or the at least one mapping catalogue and/or transformation rule and/or recommendations define at least for mandatory second properties (e.g. of mandatory elements) the manner how to transform the first properties into the second properties (e.g. of the elements).

When the mapping information or mapping catalogue and the transformation rule and the relationships are packaged into the configuration file, the software may be capable to accurately transform the first properties into the second properties and do this in a consistent manner.

The second data model may for example allow one or more elements to be present in the second data structure. Each of the elements may comprise a subset of second properties. The elements may be nested or may be arranged or structured in a hierarchical manner. Some properties may define arrays or hash tables which may have a size which may dynamically be determined. Thereby great flexibility and reliability may be provided.

According to an embodiment of the present invention, the second data model defines at data structure satisfying or including at least one of: plural nodes (e.g. elements) each having some of the second properties; an object oriented node structure; an node hierarchy; nested nodes; at least one data array or hash table of dynamic size; IEC 61400-25 for wind farms; IEC 61850 for substation equipment.

The nodes may also be referred to as elements, which may be considered for example as a complex data structure. Each node may comprise a subset of second properties. Thereby, conventionally known data models may be supported.

According to an embodiment of the present invention, analyzing the first data structure and/or a first data model and/or the second data model comprises parsing the first data structure and/or the first data model and/or the second data model; splitting and/or modifying of property names of first properties based on text processing rules; consulting the first catalogue and/or the second catalogue and/or abbreviation catalogue to infer a property name of a second property corresponding to the parsed and split properties.

Parsing may involve to read a text representation of the first data structure, the second data model or the first data model thereby subsequently reading literals and/or words. The splitting may be performed based on known data separators. The modification may also consider for example the first catalogue and the second catalogue and finding similarities between for example property names in the first properties and the second properties. Thereby recommendations of mappings or modifications of different property portions may be given to the human expert who may consider these recommendations for the final inference of the relationships or creating of transformation rules or mapping rules.

According to an embodiment of the present invention, the first data structure is provided as a flat file and comprises plural first data records, each having plural first properties, wherein inferring relationships between the first properties and the second properties comprises relating the first properties of each data record to second properties of one or more of plural second elements; wherein creating the second data structure comprises assembling and/or aggregating the one or more elements in a hierarchic and/or nested data structure compliant with the second data model.

Each of the plural first data records may adhere to the first data model. Similarly, each of the plural second elements may adhere to the second data model. Plural first data records may be converted into exactly one highest level second element which in turn may comprise plural lower second elements below the highest level second element. In other embodiments, more than one first data record may be mapped or converted to a single highest level second element of the second data structure (wherein the highest level second element may comprise one or more lower level second elements). Thereby, conversion of for example flat files into very complex data structures may be enabled.

According to an embodiment of the present invention, the first data structure relates to configuration and/or measurement data and/or state of a wind turbine and is received from the wind turbine, wherein the second data structure is supplied to a wind turbine controller and/or to a utility grip operator, and/or wherein the method is further configured to back-convert a second data structure into a first data structure, wherein the second data structure relates to control data for a wind turbine and is received from a wind turbine controller and/or a utility grid operator, wherein the first data structure is supplied to the wind turbine, wherein the method is in particular performed during operation of the wind turbine. Thereby, operation of the wind turbine and control of the wind turbine may be improved.

The method may therefore be (partly) performed online. The method may be (partly) performed offline during defining the mapping catalogues, the conversion configuration which may involve input of a human expert. However, once the configuration, including in particular mapping rules, transformation rules, catalogues and/or recommendations, has been completed, the conversion by itself may be performed online using an automated process.

It should be understood that features, individually or in any combination, disclosed, described, provided or applied to a method of converting a first data structure to a second data structure may also, individually or in any combination, be applied to an arrangement for converting a first data structure to a second data structure, according to embodiments of the present invention and vice-versa.

According to an embodiment of the present invention, it is provided an arrangement for converting a first data structure related to a device to a second data structure adhering to a predetermined second data model, the arrangement comprising: a processor configured to: analyze the first data structure and/or a first data model to which the first data structure adheres, to extract plural first properties; analyze the second data model, to extract plural (element) second properties; and
create the second data structure representing the converted first data structure using inferred relationships between the first properties and the second properties.

The arrangement may be for example part of a wind turbine, a wind turbine controller, a park controller or a utility grid operator or may be configured as a separate communication module between one or more of those equipment.

According to an embodiment, it is provided a wind turbine system, comprising: at least one wind turbine; a control and/or monitoring instance; and an arrangement according to the preceding embodiment, connected to allow communication between the wind turbine and the control and/or monitoring instance, thereby performing conversion and/or back-conversion.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates a wind turbine system including an arrangement of converting a first data structure to a second data structure according to an embodiment of the present invention;
Fig. 2 schematically illustrates a context of the conversion tool according to an embodiment of the present invention;
Fig. 3 schematically illustrates preliminary steps for the conversion according to an embodiment of the present invention;
Fig. 4 schematically illustrates a mapping tool software according to an embodiment of the present invention;
Fig. 5 schematically illustrates an example of abbreviation and terms conversion rules according to an embodiment of the present invention;
Fig. 6 illustrates an example of data type conversion rules according to an embodiment of the present invention;
Fig. 7 illustrates an example of a component and functional designation conversion rule according to an embodiment of the present invention;
Fig. 8 illustrates an example of categorization of data points from proprietary device according to an embodiment of the present invention;
Fig. 9 schematically illustrates an example of algorithm flow for the creation of a new data point name according to an embodiment of the present invention;
Fig. 10 schematically illustrates an example of a logical node determination according to an embodiment of the present invention; and
Fig. 11 illustrates in a schematic manner an implementation example of a complete tool chain for a wind turbine system according to an embodiment of the present invention.

### Detailed Description

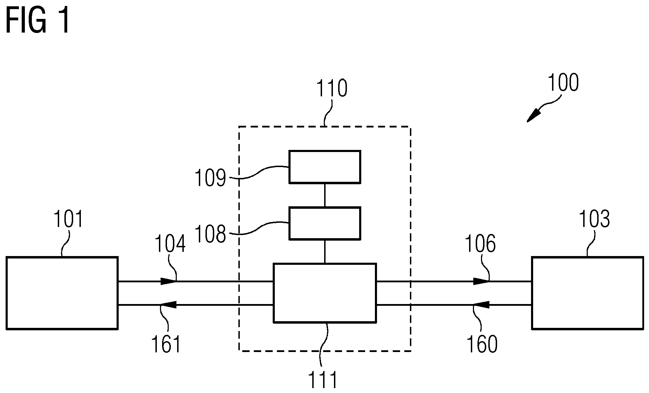

The wind turbine system 100 schematically illustrated in **Fig. 1** comprises a wind turbine 101 having a not illustrated wind turbine tower, a nacelle mounted on top of the wind turbine tower, wherein the nacelle harbours a rotation shaft at which plural rotor blades are mounted. The wind turbine 101 comprises plural mechanical and electrical devices including also measurement sensors. The wind turbine system 100 further comprises a control and/or monitoring instance 103 which may for example be or comprise or be a part of a wind turbine controller, a wind park controller or for example a utility grid operator.

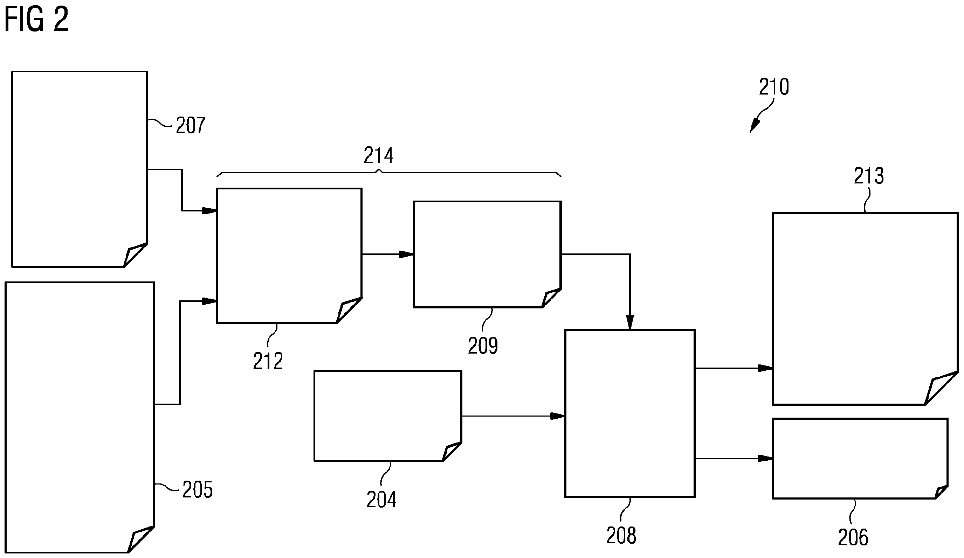

The wind turbine system 100 further comprises an arrangement 110 for converting a first data structure 104 related to the wind turbine 101 to a second data structure 106 adhering to a predetermined second data model (for example illustrated in Fig. 2 and labelled with reference sign 207). In the illustrated example the first data structure 104 may relate to sensor measurement data of a sensor device of the wind turbine 101. In other embodiments the first data structure may for example relate to a configuration or a state or any operational parameters of any device of the wind turbine 101.

Instead of a wind turbine any (e.g. logical or communication or computer) device, e.g. substation equipment, controller, measurement system, renewable generators etc., may be provided with the arrangement 110 for converting a first data structure to a second data structure.

The arrangement 110 is further configured to back-convert another second data structure 160 into another first data structure 161, wherein the other second data structure 160 relates to control data for a wind turbine and is received from a wind turbine controller and/or a utility grid operator, wherein the other first data structure 161 is supplied to the wind turbine 101.

The arrangement 110 comprises a processor 108 which runs a mapping software. Thereby, the processor 108 is configured to analyze the first data structure 104 and/or a first data model (illustrated in Fig. 2 and labelled with reference sign 205) to extract plural first properties, as will be explained below. Furthermore, the processor is configured to analyze the second data model (see for example Fig. 1, block 207) to extract plural second properties, as will be explained below. The processor 108 is further configured, in particular by using configuration data 109, to infer relationships between the first properties and the second properties. Finally, the processor 108 is configured to create the second data structure 106 representing the converted first data structure 104 using the relationships. For this purpose, the processor may output a mapping table 111 providing rules for mapping particular properties or portions in the first data structure 104 to particular properties or portions or elements in the second data structure 106. The arrangement 110 is configured to perform or control a method of converting the first data structure 104 to the second data structure 106 according to an embodiment of the present invention.

Embodiments of the present invention use a set of mapping catalogues and rules which are applied for the mapping from one data model to the other, thereby providing automatization of the transformation. The mapping catalogues and rules may be comprised in the configuration data 109 illustrated in Fig. 1 for example. From any device of the wind turbine 101 to which a proprietary data model is associated for communicating data, it is therefore possible to generate a new data model or new data structure compliant to a standard which is for example utilized by the control and/or monitoring unit 103. Thereby by the conversion, a minimum of information loss or ideally an equivalent content of information may be ensured. Furthermore, all the newly created data structures or data models (for example second data structure 106) may be consistent with each other, as they may be based on the same rules, in particular adhering to a particular second data model or also referred to as target data model.

It is noted that the first data structure 104 which in particular adheres to a predetermined first data model, may also be referred to as a source data structure, which in particular adheres to a source data model. It is further noted that the second data model which adheres to the second data model may also be referred to as the target data structure which adheres to a target data model.

It is also noted that in the context of the present invention the OEM-specific data model may also be referred to as "source information model" and the structured and standardized data model expected by the data excipients may be referred to as "target information model".

The automatization of the conversion may be performed in such a way that the data model mapping tool (for example processor 108 illustrated in Fig. 1) produces as output a data point list (for example the mapping table 111 illustrated in Fig. 1) and a description of the types used in this list (for example in the IEC 61850 context), types are described in a "data type template" file that contains data type structures such as logical node types (LN types), CDC (Common Data Class) type instantiations and also simple types such as enumerations and data object types.

**Fig. 2** schematically illustrates different method steps which may be performed during conversion according to embodiments of the present invention. The arrangement 210 for conversion according to an embodiment of the present invention illustrated in Fig. 2 in a schematic manner, comprises an inference module 212 that infers relationships between the source data model and the target data model.

The target data model 207 may comprise structured data types, naming rules, and may be based on basic elements that are assembled together. The source data model 205 may comprise a flat list of proprietary data points, attributes such as group, data type, device type, and may be derived from another data point (for example historical statistical value).

The inference about the relationships may partly be performed by a human expert. The inference module 212 outputs a set of mapping catalogues, transformation rules, and recommendations as collectively labelled with reference signs 209. The mapping catalogues, transformation rules and recommendations may represent a configuration which is supplied to the mapping tool software, which is for example implemented in a processor or which is implemented as a software running in a processor 208. The processor 208 receives as input the list of proprietary data points 204 of a specific device. The mapping tool software 208 outputs the target data structure, also referred to as second data structure 206. Furthermore, the mapping tool software 208 outputs a definition of the target data model as is labelled with reference sign 213. The definition of the target data model may comprise a list of data types needed for the target data model. The data types may include simple data types and/or structured data types, built upon the simple ones and others. The inference 212 and the configuration data 209 are considered or created during preliminary steps 214 of the conversion.

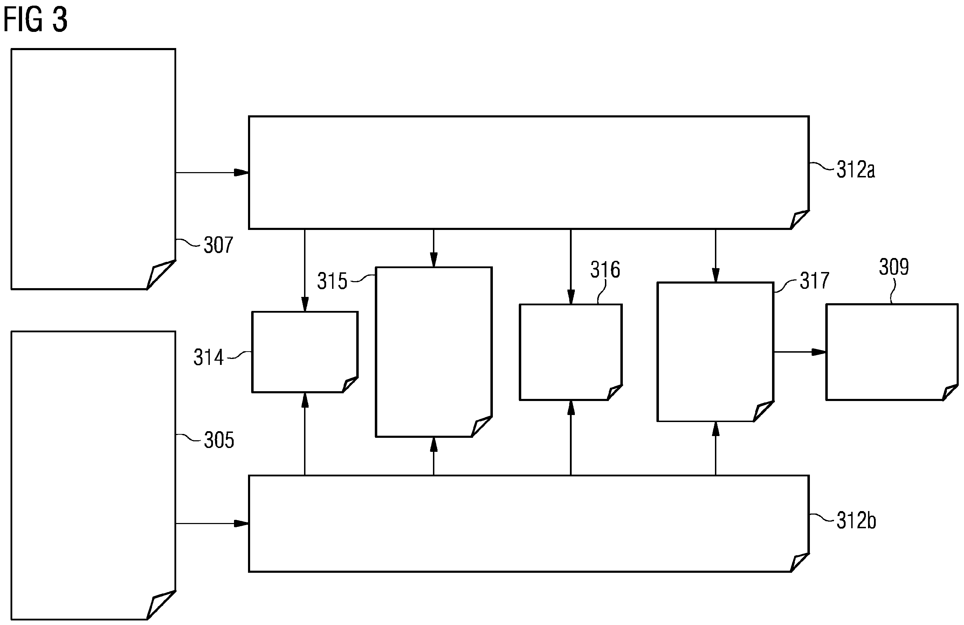

The preliminary steps for the conversion or for the mapping are schematically illustrated in **Fig. 3** in more detail.

It should be noted that structures or elements which have a same or similar structure or function in the different figures are labelled with reference signs only differing in the first digit. The description of one element which is not described in detail with reference to a particular embodiment or figure, may be taken from the description of this corresponding element relating to any other embodiment or figure.

In the embodiment illustrated in Fig. 3, the inference module is implemented consisting of a first inference model 312a and a second inference model 312b. The first inference module 312a receives the target information model 307 which may comprise similar information as is explained for the target information model 207 illustrated in Fig. 2. The second inference module 312b receives as input the generic source data model 205 which may be similarly configured as the generic data model 205 illustrated in Fig. 2. The first inference module 312a infers about what single elements or combination of elements of the target information model will be needed to be used for the transformation. The second inference module 312b infers about what single attributes or a combination of attributes of the elements of the source data model need to be considered for the transformation into the target model.

The inference modules 312a, 312b output or create catalogues for terms 314. The modules 312a, 312b further output naming algorithms 315 to create new data point names compliant to the target information model. The modules 312a, 312b further output catalogues for for data types and their corresponding data attributes which are labelled with reference sign 316. The inference modules 312a, 312b further output grouping specification of data points that may be transformed in a common way, wherein the grouping is labelled with reference sign 317. The different catalogues 314, naming algorithm 315, element type catalogues 316 and grouping definitions 317 commonly may represent a configuration 309 which may configure for example the processors 108 or 208 illustrated in Figs. 1 and 2. The configuration 309 may also be considered as a creation of recommendations for element types and groups.

Some steps as conducted illustrated in Fig. 3 may be manual steps in order to configure the software tool, for example the processor 108, 208 illustrated in Figs. 1 and 2. It is assumed that a formal specification of the target information model 307 is predetermined and existent. This specification is analyzed and is converted into a set of recommendation rules, that can be understood by an automatic tool, such as processor 108, 208. As an example, in the IEC context, this target data model specification may consist of a data scheme (for example coded as XML scheme file) that can be understood by an automatic tool, so the process of reading and analyzing the data scheme could also be automatized.

The Fig. 3 depicts the creation of the set of mapping rules, according to knowledge about the target information model and knowledge about the device specific data format. By comparing both data models it is possible to infer
- what mapping tables are necessary,
- what rules or transformation algorithms are necessary,
- what groups of elements need to be treated commonly.

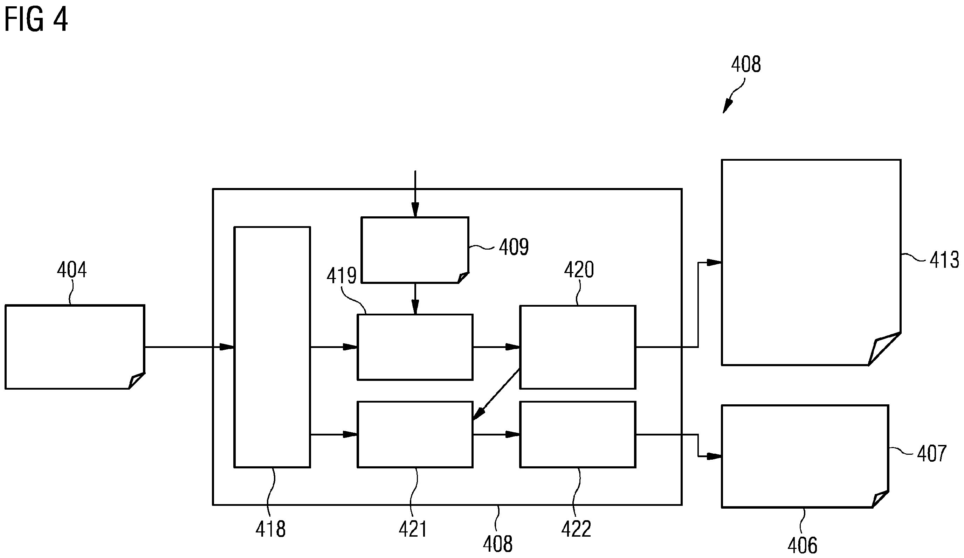

**Fig. 4** schematically illustrates a mapping tool software according to an embodiment of the present invention that may for example be considered as an implementation of a processor 408.

The processor 408 which may implement a mapping tool software receives the list of proprietary data points of a specific device, i.e. which is also referred to as "first data structure" 404. The method as executed by the processor 408 comprises a parsing module 418 which parses the input data points. The processor 408 receives the configuration and uses it as catalogues and rules/recommendations 409. The software tool 408 uses the catalogues and rules 409 in order to decide what to do for each data point of the source data model. Using the configuration 409 or the catalogues and rules/recommendations the software tool 408 determines the name and attributes of new data point types thereby also considering the parsed input data from the parsing module 418.

The determination of the names and data types is performed in a module 419. In an assembly module 420 the data object types are assembled and are added to the list of needed data types. In a determination module 421 the new data points are determined based on the output of the assembly module 420 and the output of the parsing model 418. In an adding module 422 the data points are added to the target data model, wherein the new data points are received from the module 421.

The software tool outputs the target data model 407 of the device and/or the target data structure 406. The software tool further outputs a definition of target data model data types as illustrated in module 413, which may contain similar information as the module 213 illustrated in Fig. 2.

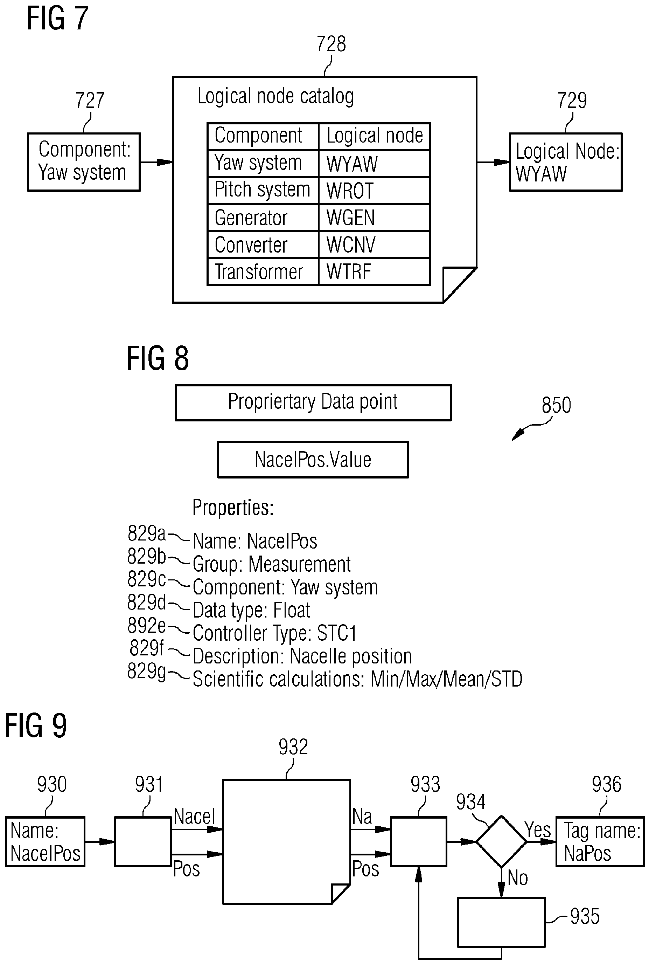

The software tool 408 may perform one or more of the following steps:
a) Assigning a standardized name to each data point (see for example Fig. 9 below). Therein, according to the rules from an abbreviation terms catalogue and additional rules defined in the software algorithm of the mapping tool, a standardized name to each data point may be assigned. There can be additional rules relating to the way to assemble terms and to manage the length of resulting names.
b) Assigning the data points to standardized groups. The groups represent the physical components or logical functions of a device. The data points are grouped based on the component they belong to or the function they deliver on the device.

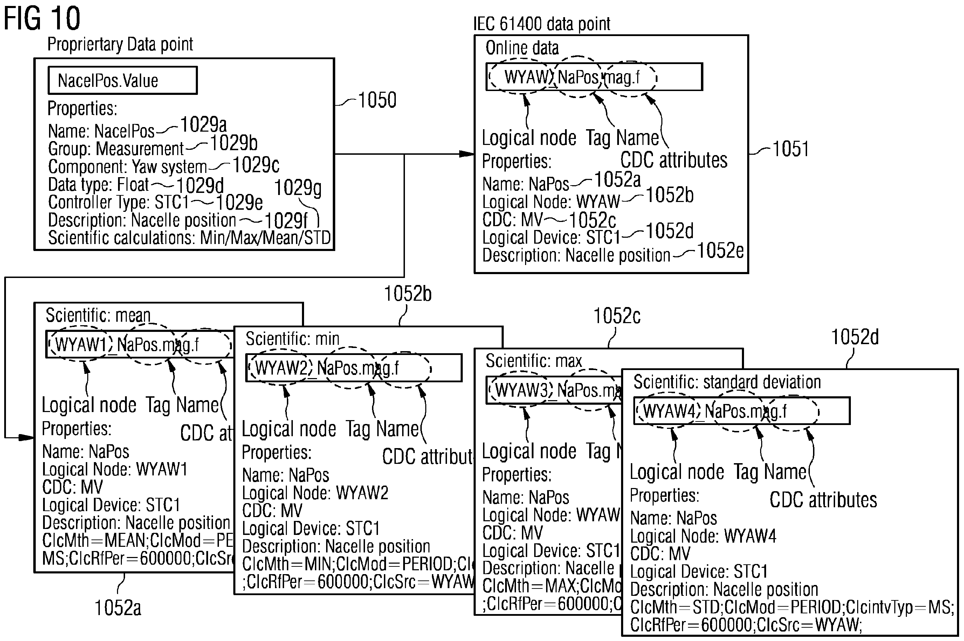

For example in the IEC context, this may correspond to assigning a logical node to a data point according to the standard.
This is for example schematically or exemplary illustrated in Fig. 10 described below. The process may also be able to handle statistical data points, in the example these may be logical nodes defined for scientific data.

c) Putting each data point in a given data structure. The newly created data points of the target model may be assembled so that they are structured or integrated into a hierarchy required by the standardized data model. In the IEC context, this may correspond to assigning a data object type to a data point.

When assembling the data structures of the target model, it may appear that some specific data types are missing. Specification of the target information model may define how these data types need to be created. The basic data types of the target data model must be chosen, aggregated and instantiated so that a new composite data type able to represent the information coming from the source data structure is created. It increases and enriches the list of standardized data types so that the new target data model is fully known and documented. The resulting data types are specific to the wind farm project but may be understood by any tool or SCADA able to read the target data model.

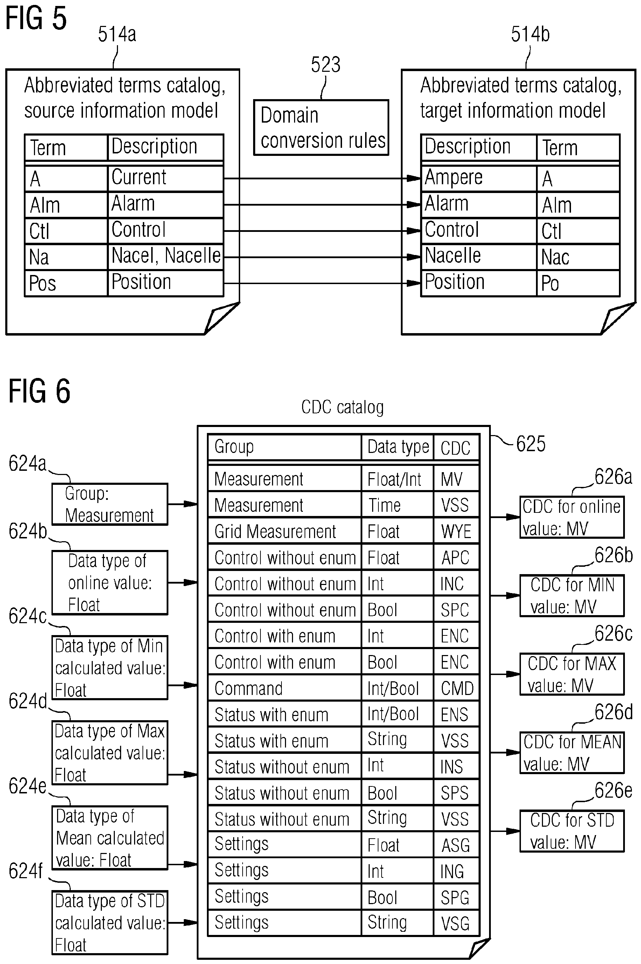

**Fig. 5** schematically illustrates a first catalogue 514a and a second catalogue 514b, which may for example be considered as an implementation of the catalogues for terms labelled with reference sign 314 in Fig. 3. The first catalogue 514a may comprise abbreviated terms of the first data structure or first data model. The second catalogue 514b may comprise abbreviated terms of the second data model. Using domain conversion rules 523, the abbreviations of the first catalogue 514a may be associated with respective abbreviations of terms in the second catalogue 514b. In other embodiments the catalogues 514a, 514b may comprise not only abbreviations but also entire properties of the first data model or data structure and the second data model or data structure.

**Fig. 6** illustrates an example of data type conversion rules. The data in boxes 624a, 624b, ... 624f, may represent properties or characteristics of the first data model or first data structure, also referred to as source data structure. The catalogue 625 may represent a second catalogue, for example a catalogue of the second data structure, i.e. a target data structure. The catalogue 625 may for example comprise or be a CDC catalogue defining common data classes. The input characteristics or properties 624a, ..., 624f may be mapped to output properties 626a, 626b, 626c, 626d, 626e which relate to the target data structure or target data model.

**Fig. 7** schematically illustrates an example of component and functional designation conversion rules. The first property 727 (a property of the first data structure) specifies the component to be the yaw system. The catalogue 728 may represent a second catalogue comprising a list of logical nodes as allowed according to the second data model, i.e. the target data model. By considering the logical node catalogue 728 during the conversion process, the property 727 may be mapped to the logical node WYAW, as is depicted by the second property 729 into which the first property 727 is converted or mapped.

**Fig. 8** exemplary illustrates an example of categorization of data points from proprietary device. In particular, the proprietary data point may represent a data record 850 comprising plural properties or plural first properties 829a, ..., 829g. Each property 829a, ..., 829g may be converted to a data element or second property within a second data structure adhering to a second data model.

**Fig. 9** illustrates an example of an algorithm flow for the creation of a new data point name. The box 930 provides as a name of the source data structure, the term "NacelPos". In a splitting module 931 the name may be split based on capital letters and wherein the terms "Nacel" and "Pos" are output. The split name is received by an abbreviated terms catalogue 932 containing abbreviated terms according to the second data model. Thus, the catalogue 932 may be considered as an example of a second catalogue according to embodiments of the present invention. By the searching through the catalogue 932 the terms "Na" and "Pos" are output and supplied to a creation module 933. The creation module 933 creates a tag name, which is supplied to a decision element 934 which checks whether the tag length is okay. If this is not the case, the process switches to the trim module 935 which trims the words not found in the catalogue (one character per iteration). Then the process flow goes back to the generation module 933. If the tag length is okay, the tag name is output, in the present example it is the term "Napos". The output is in the block 936.

**Fig. 10** illustrates in a schematically manner an example of logical node determination from a proprietary data point input. The proprietary data point input 750 may be considered as an example of a first data structure. The data record 1050 comprises the property "component: yaw system". From that, the logical node in the target data model is determined to be "WYAW". Furthermore, the data record 750 comprises the property "name: NacelPos" which is then mapped into the tag names "NaPos" according to the target data model. Furthermore, from the first properties 1029a, ..., 1029g of the data record 1050 on first data structure, the second properties 1052a, ..., 1052e of the second data record 1051 (for example representing a portion of a first data structure) is created. The data record 1051 may represent online data, i.e. data which are created during operation. From the input data record 1050, further output data records 1052a, 1052b, 1052c, 1052d are created, which relate to different scientific data, such as the mean, the minimum, the maximum and the standard deviation, respectively.

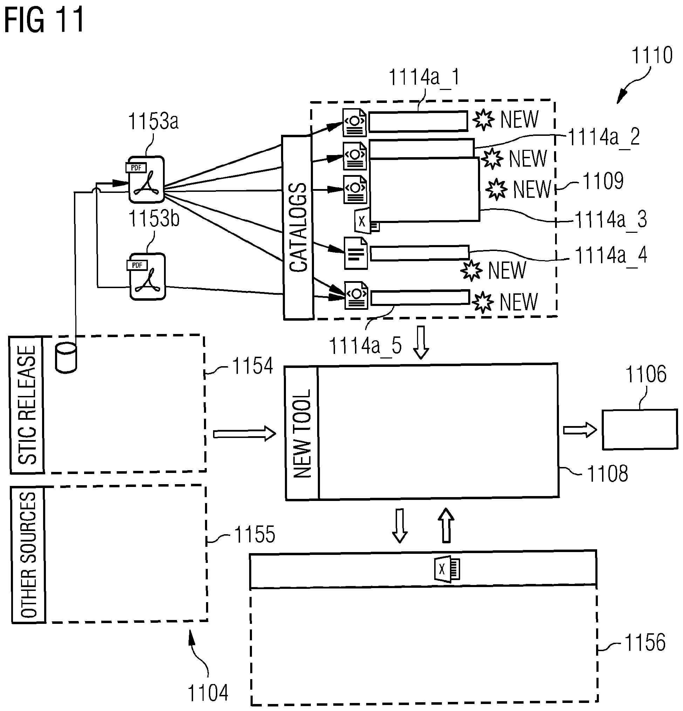

**Fig. 11** schematically illustrates an arrangement 1110 for converting a first data structure 1104 to a second data structure 1106 according to an embodiment of the present invention. Therein a mapping tool 1108 receives configuration data 1109. In the present embodiment, the configuration is derived from IEC data format or data model specification files 1153a, 1153b. The file 1153a comprises a specification of the IEC 61400-25 data model and the file 1153b comprises a specification of the data model according to IEC 61850. The configuration data 1109 comprise a number of second catalogues 1114a_1, 1114a_2, 1114a_n. The software tool 1108 also makes use of a scientific database 1154 that contains algorithms or requirements for scientific calculations. Further, the other sources 1154 are utilized by the software tool 1108. The software tool 1108 creates from several inputs the required data points for the scientific data automatically.

The mappings generated by the software tool 1108 may be saved either to a file or a database 1156. The mappings correspond to the signals and their associated properties with respect to the destination data model. This database can be used by experts to analyze the results of the mapping tool. In case the signals and their properties already exist in 1156, the mapping tool may use this information and will not generate a new mapping.

Embodiments of the present invention allow a faster creation of data that may satisfy a predetermined or desired target data model, such as IEC 61400-25/IEC 61850. Thereby, it is enabled to integrate a wide range of devices into a SCADA system. These devices may therefore easily communicate with the SCADA system regarding state information, sensor measurement information and control commands. Thereby, also mixed wind farms may easily be controlled and/or monitored.

According to embodiments of the present invention, data conversion rules may be obtained by analysis and transformation to rules that are machine-understandable (for example catalogues, decomposition and re-composition rules). An automatic software tool may apply these conversion rules for the actual conversion of data structures. Thereby costs for engineering work may be saved.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of converting a first data structure (104) related to a device (101) to a second data structure (106) adhering to a predetermined second data model (207), the method comprising:
analyzing the first data structure (104) and/or a first data model (205) to which the first data structure adheres, to extract plural first properties (729a,...,g);
analyzing the second data model (207), to extract plural second properties (1052a,...,e);
inferring relationships (212) between the first properties (729a,...,g) and the second properties (1052a,...,e); and
creating the second data structure (106) representing the converted first data structure using the relationships.

2. Method according to the preceding claim,
wherein analyzing the first data structure and/or the first data model further comprises at least one of:
creating at least one first catalogue (314, 514a) for the first properties (729a,...,g);
grouping (317) of first properties; and/or
wherein analyzing the second data model further comprises at least one of:
creating at least one second catalogue (314, 514b) for the second properties (1052a,...,e);
grouping (317) of second properties.

3. Method according to one of the preceding claims, wherein creating the second data structure is further based on at least one of:
the at least one first catalogue (314, 514a);
the at least one second catalogue (314, 514b);
the grouping of the first properties;
the grouping of the second properties.

4. Method according to one of the preceding claims, further comprising:
deriving from at least the relationships and/or the first catalogue and/or second catalogue at least one mapping catalogue (209) and/or transformation rule and/or recommendation; and
creating the second data structure (106) further based on the at least one mapping catalogue and/or transformation rule and/or recommendation.

5. Method according to one of the preceding claims, wherein creating the second data structure (106) is performed by an automated, in particular computer implemented, process (208) receiving as configuration data (209) the first catalogue and/or the second catalogue and/or the relationships and/or the at least one mapping catalogue and/or transformation rule and/or recommendation.

6. Method according to one of the preceding claims, wherein inferring relationships is performed by an expert, including at least one of:
comparing the first data structure (104) and/or a first data model (205) with the second data model (207);
deciding which first properties (729a,...,g) and second properties (1052a,...,e) need to be mapped;
deciding what rules and/or transformation algorithms are necessary,
deciding what groups of first properties and/or second properties need to be treated commonly and/or what rule applies to them; and/or
wherein inferring relationships comprises at least one of:
creating rules for mapping of elements of the first catalogue to elements of the second catalogue;
creating rules for mapping property names and/or description and/or abbreviations
creating rules for mapping data types;
creating rules for creating complex data elements comprising second properties from first properties;
storing one or more created rules in a mapping template file.

7. Method according to one of the preceding claims, wherein the first properties (729a,...,g) include at least one of:
name;
group;
component, defining a hardware and/or software component to which the first data structure relates;
data type;
controller type;
description;
scientific calculation, in particular Min, Max, Mean and/or Standard deviation;

8. Method according to one of the preceding claims, wherein the second properties (1052a,...,e) include at least one of:
name;
logical node;
common data class;
logical device;
description.

9. Method according to one of the preceding claims, wherein the relationships and/or the at least one mapping catalogue and/or transformation rule and/or recommendations define at least for mandatory second properties the manner how to transform the first properties into the second properties.

10. Method according to one of the preceding claims, wherein the second data model (207) defines at data structure satisfying or including at least one of:
plural nodes each having some of the second properties;
an object oriented node structure;
an node hierarchy;
nested nodes;
at least one data array or hash table of dynamic size;
IEC 61400-25 for wind farms;
IEC 61850 for substation equipment.

11. Method according to one of the preceding claims, wherein analyzing the first data structure and/or a first data model and/or the second data model comprises:
parsing (418) the first data structure (104) and/or the first data model (205) and/or the second data model (207);
splitting (931) and/or modifying of property names of first properties based on text processing rules;
consulting the first catalogue (932) and/or the second catalogue and/or abbreviation catalogue (932) to infer a property name (936) of a second property corresponding to the parsed and split properties.

12. Method according to one of the preceding claims,
wherein the first data structure (104) is provided as a flat file and comprises plural first data records (750), each having plural first properties (729a,...,g),
wherein inferring relationships between the first properties and the second properties comprises relating the first properties (729a,...,g) of each first data record (750) to second properties of one or more of plural elements (1051, 1052a,...,d);
wherein creating the second data structure comprises assembling and/or aggregating the one or more elements in a hierarchic and/or nested data structure compliant with the second data model.

13. Method according to one of the preceding claims,
wherein the first data structure (104) relates to configuration and/or measurement data of a wind turbine (101) and is received from the wind turbine, wherein the second data structure (106) is supplied to a wind turbine controller and/or to a utility grip operator (103), and/or
wherein the method is further configured to back-convert another second data structure (160) into another first data structure (161),
wherein the other second data structure (160) relates to control data for a wind turbine and is received from a wind turbine controller and/or a utility grid operator, wherein the other first data structure (161) is supplied to the wind turbine,
wherein the method is in particular performed during operation of the wind turbine.

14. Arrangement (101) for converting a first data structure (104) related to a device (101) to a second data structure (106) adhering to a predetermined second data model, the arrangement comprising:
a processor (108) configured to:
analyze the first data structure and/or a first data model to which the first data structure adheres, to extract plural first properties (729a,...,g);
analyze the second data model, to extract plural second properties (1052a, ...,e); and
create the second data structure (106) representing the converted first data structure using inferred relationships between the first properties and the second properties.

15. Wind turbine system (100), comprising:
at least one wind turbine (101);
a control and/or monitoring instance (103); and
an arrangement (110) according to the preceding claim, connected to allow communication between the wind turbine and the control and/or monitoring instance, thereby performing conversion and/or back-conversion.
